Europäisches Patentamt

European Patent Office

Office européen des brevets

(19)

(11) Publication number : **0 526 045 A2**

# (12) EUROPEAN PATENT APPLICATION

(21) Application number : 92306501.5

(22) Date of filing : 15.07.92

(51) Int. Cl.⁵ : **H04N 9/30**

(30) Priority : **31.07.91 US 738034**

(43) Date of publication of application :
**03.02.93 Bulletin 93/05**

(84) Designated Contracting States :
**AT BE CH DE DK ES FR GB GR IT LI LU MC NL PT SE**

(71) Applicant : **nVIEW CORPORATION**
**11835 Canon Boulevard**
**Newport News, Virginia 23606 (US)**

(72) Inventor : **Vogeley, James H.**
**210 Yorkview Road,**
**Yorktown, Virginia 23692 (US)**
Inventor : **Vogeley, Arthur W.**
**210 Yorkview Road,**
**Yorktown, Virginia 23692 (US)**
Inventor : **Kosin, Kenneth**
**4 Marcella Road,**
**Hampton, Virginia 23666 (US)**

(74) Representative : **Smith, Martin Stanley et al**
**Stevens, Hewlett & Perkins 1 St. Augustine's Place**
**Bristol BS1 4UD (GB)**

(54) Method and apparatus for simulated analog control of color video for LCD applications.

(57)    Disclosed is a method and apparatus for driving conventional 3-bit luminance digitally accessed LCD panels so as to provide a perceived greater number of colors than can be directly or digitally accessed. In one embodiment, spacial mixing is used to access adjacent pixels which, when viewed from a distance, appear to be a color average of the two pixels. In another preferred embodiment, temporal mixing is utilized such that each pixel is accessed two or more times so that the time-wise average luminance level is perceived by the observer. In a further preferred embodiment spacial and temporal mixing are used to provide a "real time" or "on the fly" embodiment which provides accurate 5-bit perceived color displays. In a further embodiment, the use of a dual port frame store allows video to be clocked in to the storage at a conventional video rate but the data can be clocked out at a much higher rate so that a greater amount of temporal mixing can be utilized to provide 6-bit perceived color.

FIG. 4

## BACKGROUND OF THE INVENTION

### 1. Field of the Invention

The present invention relates generally to the generation of color by means of Liquid Crystal Displays (LCD) and specifically to unique methods and apparatus for simulating continuous analog color in an LCD display which has a limited number of luminance levels per pixel.

### 2. Discussion of Prior Art

Liquid crystal display (LCD) technology has rapidly advanced to the point where it is seriously challenging the cathode ray tube (CRT) as a display Device. Initially, the technology for LCD's with enough resolution to display computer-generated imagery, consisted of a passive matrix permitting only on/off operation of the pixels in a "monchrome" or two-color mode. Such systems were utilized with projectors and/or direct view devices, such as those described in U.S. Patent 4,763,993 issued August 16, 1988 to Vogeley et al, herein incorporated by reference.

While such simple on/off or black/white operation is adequate for the presentation of alphanumerics, it is not satisfactory for graphics where a significant number of grey levels is needed. Attempts have been made in the past to use spatial and/or temporal mixing with black and white passive matrix LCD panels with success in achieving gray scale variations in images. However, professional quality color display devices require that continuous (analog) or near continuous (32 to 256 or more discrete levels) of color level control be provided. Such flexible control of color levels is particularly important for the realistic display of video images, such as those generated by video tape and/or laser disk players. Given continuous tones, subtle color delineations can be realized which are important for flesh tones, etc. Color stepping and associated transition noise phenomena can either be eliminated or substantially reduced.

It should be understood that color stepping and transition noise occurs as a consequence of mapping an analog or non-synchronized digital video signal into a discrete color map. Stepping is typically seen in tonal areas of an image where although the analog signal moves gradually from one level to another, a point will be reached where the digital video jumps from a lower level to a higher level. At the transition line, a step is visible unless quantization of the discrete map is so small as to be imperceptible.

Transition noise occurs in image areas where the signal processing circuitry is unable to uniquely map the analog signal. This commonly occurs in tonal areas and can be seen as a signal (noise random jumping between two adjacent color levels) along discrete transition boundaries but this can also be seen in constant color areas where a particular video input happens to be at a transition value. Transition noise can be reduced or eliminated by certain signal processing techniques, such as hysteresis (described in "method and apparatus for displaying RGB and sync video without auxiliary frame storage memory", U.S. Application Serial No. 07/664,950 filed March 5, 1991 by Vogeley et al. However, providing near continuous color control greatly reduces transition noise directly and effectively.

Flexible color control assures a more accurate match of selected color to displayed colors and, as noted above, greatly reduces the risk of transition noise. Additionally, as computer programs become more and more sophisticated, computer video data is becoming more complex, and in many cases, includes real life video images. Thus, the distinction between computer data and video data is becoming less clear and the requirements for continuous color control in computer applications is becoming stronger. It is also desirable to design video products which work effectively for both data and video display. Such multipurpose display devices are attractive to today's video customers for obvious reasons.

The cathode ray tube (CRT) is currently accepted as the standard display device for electronically generated images. The CRT provides the engineer with analog control of color intensity by providing direct access to an electron gun. By varying the voltage supply to the gun, the intensity of the associated color can be controlled in a continuous (analog) fashion.

Thin-film transistor (TFT) liquid crystal display (LCD) architecture utilized in LCD displays available from Sharp Electronics Corporation, Microelectronics Group, 5700 NW Pacific Rim Boulevard, Camas, Washington, 98607, allow for pure analog control of individual pixels only in LCD panels of relatively low resolution. Using such architectures, an entire row of pixel data must be buffered and clocked onto the TFT panel as a block. This means that some type of signal storage for an entire row of pixels must be provided. For low resolution panels used in applications where absolute uniformity of the displayed image is not too important, clocked sample and hold capacitive storage elements have proven effective.

Such an arrangement provides for true analog pixel control and is widely employed in consumer applications of the TFT panel, such as the Sony Watchman™ pocket television device. These panels typically have less than 600 total pixels on a display row and the requirement for display uniformity is minimal, color control being more important in video applications than unformity. Signal inputs to these panels is provided in analog form, accompanied by a sampling clock which stores charge packets in each of the individual storage elements across a display row.

To maintain display uniformity, the clock period must be long enough to "swamp out" the effects of propagation delay variations and the capacitive storage element size must be large enough to "swamp out" manufacturing variations. This is possible and has been accomplished in low resolution video applications having relatively slow clocks.

Unfortunately, in the larger TFT-LCD panels designed primarily for computer data applications, either direct view or projection view, the architecture described above although technically sound, has yet to be proven manufacturable. Computer display applications generally require a greater degree of display uniformity and data rates are generally faster, meaning that clock periods are shorter and the effects of clock propagation delay variations are much more significant. When these factors are combined with the added complexity of greater resolution, these have led to alternative line storage architecture for larger TFT panels.

In such larger panels, the pixel storage elements comprise digital storage registers and simple digital-to-analog converters. In use, data is provided to the panel in digital form and is clocked into a data register for each pixel on a row. This digital word is then converted at the point of application to the panel by a resistive digital-to-analog converter. This arrangement is insensitive to clock period variations and is easier to manufacture reliably.

It is clear, however, that the complexity of this architecture increases dramatically as more and more bits of color definition are implemented. The currect state of the art TFT-LCD panel available from Sharp Electronics Corporation (part number LQ10P011) provides for three-bits of luminance control for each fundamental color. Three-bits provides for eight (2 x 2 x 2) levels of red, eight levels of green and eight levels of blue control for a total color palate of 8 x 8 x 8 or 512 colors. While this is somewhat unsatisfactory for the newer requirements with respect to the display of computer data, it is completely insufficient for the display of real-life video.

Current video standards call for a minimum of 5-bit per color definition (32 x 32 x 32 = 32,768) colors for merely "acceptable" video and computer data display. It is generally believed that eight bits (256 x 256 x 256) for 16.7 million colors is required for the high quality display of video and for "Pantone" accurate representation of computer colors.

Such stringent requirements for color accuracy are important in computer applications such as desktop publishing where the final look of the image on a display device is critical to the design process. Such applications include advertisement design and consumer product design. Therefore, it is desirable to be able to determine some manner in which a conventional three-bit per color TFT-LCD panel can be driven to simulate analog control equal to 4, 5, 6 or more bits definition.

## SUMMARY OF THE INVENTION

In view of the above disadvantages of such prior art color video drivers for limited luminance variation TFT-LCD panels, it is an object of the present invention to provide a method and apparatus for driving such panels so as to simulate to the human observer a TFT-LCD panel driven by a much greater number of discreet luminance variations.

It is another object of the present invention to provide a method and apparatus for spatial mixing of pixels wherein individual pixels are driven at different luminance levels such that the observed effect is a group of pixels driven at a luminance level not equal to one of the available discrete luminance levels of the panel.

It is a further object of the present invention to provide a method and apparatus for temporal mixing of discreet colors by driving a panel pixel at one discrete luminance level for a portion of a color "complete" output frame period and for driving it at a second discrete level for another portion of the color "complete" output frame period so that the average luminance over the entire color "complete" frame period is different from any available discrete luminance level, where a color "complete" output frame is equal to the number of output display frames necessary to display the desired perceived color output.

It is a still further object of the present invention to provide both spatial and temporal mixing of luminance levels applied to pixels and pixel groups so as to obtain perceived luminance levels of each color which are not achieveable by the limited luminance variations available on current TFT-LCD panels.

The above and other objects are achieved by providing the method of and apparatus for spatial mixing by converting analog color input to a digital format, which mixing has the desired level of luminance variations. The digital input is applied to a look-up table which is clocked by horizontal and vertical sync signals so as to supply a digital output to the LCD display for providing one of the limited luminance levels for the addressed pixel. However, in one embodiment an adjacent pixel or in a preferred embodiment a group of four pixels is accessed (the so-called "quad-pixel") with individual ones of the multiple pixel group being supplied with different luminance levels such that the perceived luminance level of the 2, 3 or 4 pixel group is a luminance level which is not addressable by a single pixel input.

The above and other objects are also achieved in accordance with the temporal mixing aspect of the present invention by applying the digital output of the A-to-D converter discussed above to a look-up table which provides one of the luminance level energizing signals to a given pixel of the display for a portion of the "complete" output display frame duration and then applies a different luminance level signal to the same pixel for the remainder of the "complete" output frame duration. The result is that the individual pixel "toggles" or jumps between two different luminance levels so as to achieve an average luminance level which is between the limited luminance levels available if the pixel is continuously energized.

The above and other objects are achieved in a further preferred embodiment in which spatial and temporal mixing is combined where specifically a four-pixel quad is spatially mixed to provide one output average color for a portion of the "complete" output display frame and the same quad pixel is spatially mixed to provide a second color output during the remainder of the "complete" output frame duration such that the two outputs during the "complete" output display frame duration are temporally mixed to provide an average luminance level output which is different from any of the luminance levels available with a continuous address of a single pixel.

## BRIEF DESCRIPTION OF THE DRAWINGS

A better understanding of the method and apparatus for simulating analog color control of TFT-LCD panels may be had by reference to the accompanying drawings, in which:

FIGURE 1 is a top view of a three-color pixel on a conventional TFT-LCD panel;

FIGURE 2 is a top representational view of a 10 by 10 pixel array illustrating one embodiment of spatial mixing;

FIGURE 3 is a top representatial view of the 10 by 10 pixel array of Figure 2 with a preferred spatial mixing;

FIGURE 4 is a block diagram of a "realtime" spatial and/or temporal mixing embodiment of the present invention, related to variations of a single color luminance channel; and

FIGURE 5 of the block diagram in which the output display frame rate is not a function of the input color frame rate in accordance with a further embodiment of the present invention encompassing all three color channels.

## BRIEF DESCRIPTION OF PREFERRED EMBODIMENTS

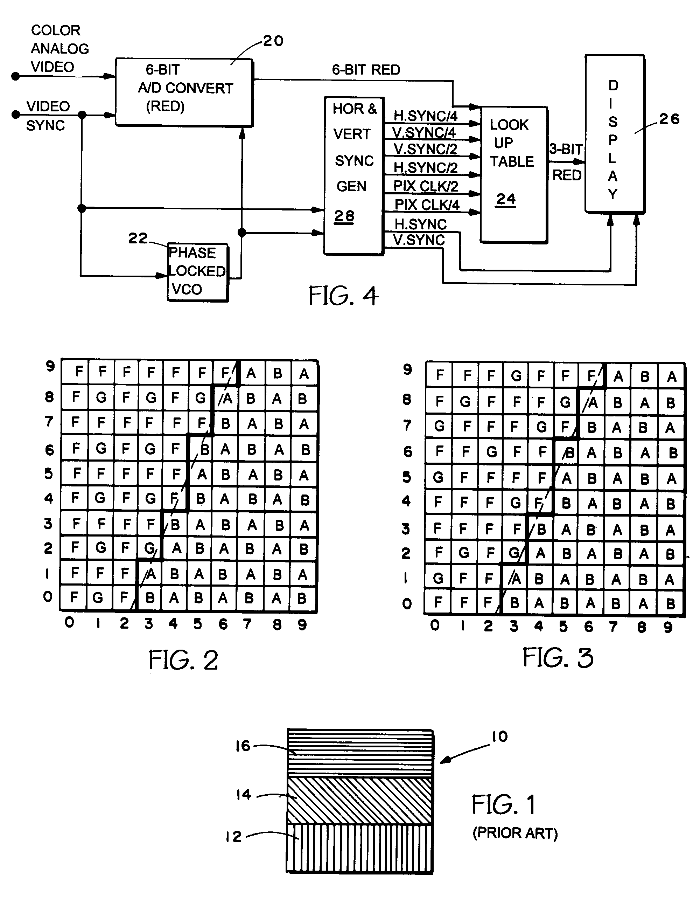

Figure 1 represents a conventional pixel 10 which includes red area 12, green area 14 and blue area 16. Most color TFT-LCD panels use vertical rows of transistors operating behind repeating horizontal sequences of red, green and blue filter strips. All the transistors in any given row are activated simultaneously by the matrix addressing method commonly used to realize high resolution displays.

As with CRT's, a mixture of red, green and blue light sources, each of proper luminance, produces white light. By mixing these light sources and, by varying the luminance of each, it is theoretically possible to produce all colors or grey levels. Practical considerations of complexity, cost, etc. normally limit the attainable number to some lesser amount. As previously discussed, the currently available TFT-LCD panel are responsive to a three-bit digital signal input, which changes to an analog signal through an A/D converter internal to the panel, which then applies a transistor drive voltage to the transistor varying the luminance level of that particular portion of the pixel for that specific color.

For a three-bit signal, only eight separate code variations are available and therefore eight digitally accessible color luminance levels are available. The following table illustrates a three-bit code luminance level, code value and equivalent value for each of the eight luminance levels.

| Luminance Level | Three-Bit Code | Code Value | % of Max Luminance |
|---|---|---|---|
| A (Max.On) | 111 | 7 | 7/7=100.0% |
| B | 110 | 6 | 6/7= 85.7% |
| C | 101 | 5 | 5/7= 71.4% |
| D | 100 | 4 | 4/7= 57.1% |
| E | 011 | 3 | 3/7= 42.9% |
| F | 010 | 2 | 2/7= 28.6% |
| G | 001 | 1 | 1/7= 14.3% |
| H (Off) | 000 | 0 | 0/7=  0.0% |

## Table 1

In accordance with the above, eight luminance variations of each of three colors is available. Therefore, the total number of digitally accessible colors available from a single pixel will be no more than $8^3$ or 512 colors.

## THEORY OF OPERATION

### Spatial Mixing

The hue or frequency of light passed by red 12, green 14, and blue 16 portions of pixel 10 as shown in Figure 1, does not change as it passes through the LCD, although based upon the voltages applied to the control transistors for each of these segments, the luminance level can vary to one of eight different values.

"Spatial" mixing is the term applied when intermingled elements of different colors are gradually reduced in size and brought closer together such that they are perceived by a viewer as being of an average color which is not one of the digitally accessible colors. For example, when red portion 12 of pixel 10 is energized and blue portion 16 is energized at the same level, a very close examination will show the two different colors on these adjacent portions of the pixel.

However, as the pixel elements become smaller or as the viewer moves away from the pixel (or a combination of both), the red and blue will gradually meld into a uniform field of purple. This is well known in the CRT generation of color in which red, green and blue dots are energized at varying levels of luminance so as to provide all desired colors. This variety of color can be achieved because of the analog control of the luminance level of each of the phosphors which are activated by passage of the electron beam. As noted previously, such cannot be done with respect to LCD panels which at least presently require limited digital control, especially those with large numbers of pixels to provide high resolution images.

Therefore, as shown in the above Table, each color is limited to eight variations in luminance and each of the possible combinations of colors and varying degrees of luminance provides only 512 separate colors. Since we are talking about a single pixel, the above spatial'mixing takes place at a "sub-pixel" level such that the separate primary colors are not discernible at normal viewing distances. The group of three transistors form what is called the "data" or pixel level.

At the pixel level, an observer would be able to see a checkerboard of red, blue and green squares. Even at the sub-pixel level, another aspect of spatial mixing can be seen. This aspect is related to the luminance or contrast level between the colors being mixing. As the luminance level or the contrast between the colors are decreased, it becomes more and more difficult to see the checkerboard pattern and complete mixing at the lower levels may even be observed.

Also, at the "data" or pixel level another parameter is significant. Where a checkerboard pattern, as discussed above, is created to permit complete mixing as viewed from some distance, if the squares are rearranged to form horizontal or vertical alternating stripes, these stripes are invariably readily observed. This phenomenon is closely related to the well known capability of people to clearly see a distant wire whose diameter is well below the presumed limit of visibility for small objects. It is also related to the ability to keep small dim objects or lights in view by looking slightly away from them whereas direct observation will often cause the objects to quickly disappear. This idiosyncrasy is, incidentally, used by airplane pilots to detect and keep in sight other aircraft, day or night.

The conclusion which can be drawn from the above is that colors to be mixed should be presented in the smallest size possible and as uniformly distributed over an area as is possible. This results in the "data-size" checkerboard being a preferred pattern with stripes (even of short lengths) to be avoided. Also, if it desired to mix units or groups of pixels (such as a 2 x 2 "quad-pixel" which is two pixels wide and two pixels high), the luminance or contrast differences should be minimized.

It has been determined that spatial mixing on the pixel level can also provide a good representation of colors which are not one of those digitally accessible 512 colors utilized on conventional TFT-LCD panels. Such spatial mixing can be accomplished by alternating the color of pixels in the portion of a row having a certain color such that when that portion of the row is viewed from the observer's view point, the observer perceives a color which is the average or combination of the digitally accessed luminance levels.

For example, to develop a color which utilizes a blue having a luminance level which is between the maximum "A" and the next digitally accessible level down "B", odd pixels in a row could be energized with three-bit code 111 (for "A") and the even pixels in that row could be energized at the digitally accessed level (for "B"), i.e. three-bit code 110. The resulting luminance level of blue would be perceived to be directly between "A" and "B". Thus, the effective number of luminance levels for each color is increased from eight to sixteen which is the equivalent of four-bit color input.

It can be seen that four-bit per primary color provides a total of 16 x 16 x 16 or 4,096 separate colors. Another embodiment of spatial mixing utilizes a "quad pixel" or four adjacent pixels is illustrated in Figure 2 where a 10 x 10 pixel matrix is shown as a 5 x 5 matrix of quad pixels. It can be seen that pixel 00, 01, 10 and 11 form a "quad pixel" in the lower left corner of the figure. It will be appreciated that an additional bit of perceived color can be realized since the human eye tends to average pixels in close proximity.

Obviously, if the quad in the lower left corner is completely energized at luminance level "F", each of the blocks would be designated "F". As it is illustrated, one of the blocks is one step lower, i.e. luminance level "G" and so the overall luminance of the quad pixel will be slightly less than "F". By varying the combination of luminance levels of the four pixels in a quad pixel, an additional bit can be achieved to provide 5-bit color. 5-bit color results in 32 x 32 x 32 or 32,768 total colors. Thus, simply by spatial mixing, a dramatic increase in the colors available on a conventional 3-bit addressed TFT-LCD panel can be realized.

Figure 2 also illustrates one potential problem if each pixel quad is programmed to respond to the same 5-bit input code in the same fashion. It can be seen that in the lefthand quad pixels, the orientation of the "G" luminance is in the same position relative to the other "F" luminances. Thus, there will be vertical and horizontal lines which are at the "F" luminance as well as vertical and horizontal lines which are at the $\frac{F + G}{2}$ luminance.

If the contrast between the "F" and "G" luminance were great enough, it might be possible for vertical and horizontal lines to be perceived on such a display.

Figure 3 illustrates one solution and it can be examined that while each quad pixel contains the same relative number of "G" and "F" luminance level pixels, the orientation of the "G" pixels relative to the "F" pixels varies. This more random approach helps eliminate any possibility of perceived horizontal or vertical lines in the FFFG "quad pixel." Of course, the color to the right is formed by a quad pixel having AA + BB luminance or the luminance level is the average of pixel luminance A and pixel luminance B. While spatial mixing can be used to provide additional colors, it can also result some decrease in the resolution of a panel in that the pixel size is effectively doubled (from a single pixel to a quad pixel having a length equal to two pixels and a width equal to two pixels). However, this slight decrease in resolution is clearly acceptable given the large increase in colors available from the TFT/LCD panel, 32,768 as compared to 512. Therefore, spatial mixing is an important option in the TFT/LCD display driver's arsenal of secrets.

## Temporal Mixing

A further method of achieving luminance levels which are not directly digitally accessed (levels other than the 8 levels at the panel) is to use temporal mixing which is defined as the mixing of two or more basic colors or luminance levels by switching from one to another at a more or less rapid frequency. In other words, if the same pixel is supplied with a digital code "A" for 50% of the time and a digital code "B" for the other 50% of the time, the average luminance level will be $\frac{A + B}{2}$.

The visual perception of this average luminance is dependent upon the switching being rapid enough to avoid the phenomenon of "flicker" which is both observationally and stressfully quite objectionable to the viewer. To eliminate the sensation of flicker under most circumstances, it is the usual practice for TV video to use interlacing so as to present about 60 half frames per second (a total of 30 full frames per second). Video monitors also can use phosphors with persistence so that a scanned line does not turn completely off during the time the line is not actually being scanned. The use of persistence involves a trade-off between the reduction of flicker and the amount of smearing which could be observable during motion.

Theater motion pictures eliminate flicker by presenting 24 frames per second but each frame is shown twice for an effective 48 Hz rate. This strategy eases the intermittent (stop and go) film motion problem.

Temporal mixing can also be used to generate intermediate color by "flickering" or "toggling" back and forth between two luminance levels with a single pixel. Just as spatial mixing provides eight extra luminance levels per color, the same can be said of temporal mixing in which a 50% duty factor is utilized. If a display luminance level between two digitally accessible luminance levels is desired, the pixel is alternated between the two digitally accessible luminance levels at a 30 Hz rate (given an input frame rate of 60 Hz). Since 30 Hz is above the critical flicker frequency for humans (and indeed provides a "safety" margin) since it avoids flicker even at extreme luminance (contrast) differences (up to 100%) even though the toggling is between adjacent luminance levels which means the difference in luminance between A and B is only around 14%.

A color "complete" output frame duration is defined as the time required for a sufficient number of output frames to be displayed so as to provide a complete perceived color. As discussed above, the display is driven at the same frequency as the input video (although as will be seen this is not always required). However, because the display output varies between color levels, two adjacent output display frame are required in order to provide the desired perceived color level. Accordingly, although the duration of a single output frame would be 1/60th of a second, two frames would be necessary for "complete" color and therefore the color "complete" output frame duration would be 1/30th of a second.

As can be seen, it would appear that the simplest approach to generate more luminance levels is to average two levels by switching between them at about the 30 Hz rate. For example, using the equivalent code values for convenience and referencing the following Table, it can be seen that we can generate a level of seven by averaging six and eight in time sequence, i.e. energizing the same pixel sequentially at luminance level "D", "E", "D", "E" etc. A minor problem with this simple method is that we generate only fifteen levels resulting in only (15 x 15 x 15) or 3,375 colors for an 18% loss in total possible colors. This loss results from the assumption that it makes no difference whether we average between 6 and 8, 4 and 10, or 2 and 12.

However, the above assumption that several different averages would produce the same result is generally observed to be incorrect in practice. An improvement to the present method can be made by examining the various "equivalent" averages and selecting the one that provides the best fit into the original 15-step range. Because of the number of significant factors that can affect the appreciation of brightness by a viewer and the fact that these factors cannot always be strictly controlled, it may be difficult to find an appropriate 16th step. In such cases, non-linearity may be approached by deliberately introducing changes to the preset voltage levels which are supplied to the panel and are applied by the individual pixel transistors. The difficulty with this expedient is that changes and operating conditions, aging, etc. may not continue to produce the desired result over time.

A further preferred approach is to reconfigure the D-to-A converters on the panel itself by slightly adjusting the transistor drive voltage from those in present use. This approach is shown by the following Table 2.

| Luminance Level | 3-Bit Code | Adjusted Code Values | % of Max Luminance | Pixel Level Temporal Sequences |
|---|---|---|---|---|
| A (Max.On) | 111 | 15 | 15/15=100.0% | AAAA |

| | | | | |
|---|---|---|---|---|
| | | 14 | | ABAB |
| B | 110 | 13 | 13/15= 86.7% | BBBB |
| | | 12 | | BCBC |
| C | 101 | 11 | 11/15= 73.3% | CCCC |
| | | 10 | | CDCD |
| D | 100 | 9 | 9/15= 60.0% | DDDD |
| | | 8 | | DEDE |
| E | 011 | 7 | 7/15= 46.7% | EEEE |
| | | 6 | | EFEF |
| F | 010 | 5 | 5/15= 33.3% | FFFF |
| | | 4 | | FGFG |
| G | 001 | 3 | 3/15= 20.0% | GGGG |
| | | 1.5 | | GHGH |
| | | 1.5 | | GHGH |
| H (Off) | 000 | 0.0 | 0/15= 0.0% | HHHH |

## Table 2

It should be noted that the above method of temporal mixing produces sixteen luminance levels at a single transistor of a pixel and therefore maintains the single pixel resolution while substantially increasing the available luminance levels for each color. A slight amount of "cheating" is done by the expedient of duplicating the 1.5 level to take the place of the 1 and 2 levels. Note that the new code values permit precise control of the "uniformity and size" of the luminance steps from level 15 down to level 3 to be made in accordance with a 16 level (4-bit) system except for the slight anomaly below luminance level 3 which will be difficult to detect at these lowest luminance levels. This "uniformity/size" goal cannot readily be reached by trying to fit a 16th level somewhere between 15 levels that vary "essentially uniformly" from 14 to 0. For some applications, it may be more appropriate to provide one 1.5 level and duplicate the 0 level.

The specific voltages applied by the D-to-A converter on the LCD panel to the pixel transistors generally are not linear with respect to their variations in luminosity between 0 and 7. However, such D-to-A converters generally rely upon a resistive ladder to convert the 3-bit digital code to the analog control voltage or current applied to the pixel transistors. Generally the resistive ladder is chosen by the panel manufacturer so that as in Table 1, there is an equal change in luminosity between digitally accessed levels (in Table one this change is approximately 14.3% of maximum luminosity).

Normally, an increase in non-linearity would be considered disadvantageous to a panel user displaying conventional 3-bit color input (because the variations between color luminance levels will no longer be uniform). However, in a preferred embodiment of the present invention, instead of picking the luminance levels to be accessed which provide the perceived color in a trial and error manner (for example trying 6 and 7, or 5 and 8 or 4 and 9 to obtain the best perceived color for 6.5), the panel and D-to-A converter (generally located on the panel and manufactured therewith) are modified during or after manufacture so as to provide equal graduations in luminance levels between level 15 down to 3 (since below level 3 any irregularity in luminance level would not be significant) in the 4-bit per color temporal and/or spatial mixing embodiment (in a 5-bit temporal and/or spatial mixing embodiment level 31 down to level 7). This non-linearity is chosen even though this would be more unsuitable for conventional 3-bit color (because there would then be non-linear graduations in the digitally accessed color luminance from level 7 down to 0.

The comparison between Tables 1 and 2 demonstrates that if the drive voltages on the pixel transistors can be changed (whether by changing the resistor ladder or otherwise) from a uniform 14.3% step (between each digitally accessed color) to a 13.3% step (at least down to the 3 level) closer gradations can be obtained with better uniformity of perceived color between the digitally accessed color levels.

It can be seen that if a single pixel has its luminance varied between and among 8 digitally accessed luminance levels for a total four succeeding frames, the average pixel level output will be perceived to be the average of the four luminance levels. Therefore, just as the quad pixel in "spatial" mixing is perceived as a single color, the four frames of a "temporal" mixed single pixel will be perceived as a single color. Clearly the color "complete" output frame duration will be that time necessary to display the required four frames. While this could present some flicker problems at high contrast ratios, as seen above, with the minor contrast differences between adjacent luminance levels available, flicker is effectively eliminated even at 15 Hz color "complete" output display rate. Accordingly, a 60 Hz input could easily be used to provide a 15 Hz display in which each pixel has a perceived 5-bit color (32,768).

In view of the above, it would appear that the original accessed 3-bit luminance levels coupled with an additional 2-bits by utilizing quad pixel spatial mixing coupled with an additional 2-bits for four frame temporal mixing will provide 7-bit color which provides a color palate of 7-bit color which provides a total of 128 x 128 x 128 or 2,097,152 variations in color. Quite obviously, this is a dramatic improvement and approaches the desired 16,000,000 variations necessary to produce the most precise tonal qualities which can be perceived by the human eye.

## Combination of Spatial and Temporal Mixing

Although a 5-bit color system could be provided by either one of spatial or temporal mixing, in a preferred embodiment, both are employed to provide mixing at the quad pixel level. Note that if one simply interpolates twice between the present set of 3-bit values, only 29 separate levels are produced yielding only 24,389 colors (29 x 29 x 29) for a loss of over 25% which can be recovered only if 3 "non-linear" values as discussed above can be inserted. As discussed before, the preferred approach is to adjust the transistor drive voltages of the panel as indicated under the adjusted code values in the Table below where the new values are expressed in new step ratios from the original uniform 0 to 7 to a spread out set of values from 0 to 31. In the Table below, the numbers following the mixing processes used indicate that the temporal mixing is completed over 2 or 4 frames of information.

It will be seen that sequences involving the same luminance level throughout the sequence is, of course, complete in each frame of information whereas sequences which repeat such as A-B-A-B are complete after two frames and then the information is repeated. It is only those luminance levels which have three of one luminance level and a fourth different luminance level combined which require four full frames of information. Therefore, fully half of the desired levels are produced either at the basic display frame rate (no mixing needed) or at half the basic rate which is well above any critical flicker frequency for the vast majority of applications.

Also, as can be seen, in the preferred embodiment below, all of the four-frame luminance levels above 8.25 are designed to require only one-step differences from pixel to pixel and frame to frame (FFFG or FGFG, for example) significantly reducing the detectability of flicker even at high luminance levels. At values below 9 where 2-level changes are required (FFFH, for example) the reduced luminance levels operate to reduce or mask the level of observable flicker.

A consideration for selecting the embodiment discussed here and perhaps tolerating a slight amount of residual flicker is that the processes, as will be discussed, can be done "on the fly" which means that the incoming video data can be received, processed and passed to the display without requiring the cost, complexity and space (particularly for three color systems) of intermediate data storage.

The minor departures from the exact steps shown at the bottom of the Table avoid the complexity required to reach "proper" values while the differences at these low luminance levels are inconsequential and essentially undetectable.

| Luminance Level | 3-Bit Code | Adjusted Code Values | % of Max Luminance | Mixing Process | Generation Code |
|---|---|---|---|---|---|
| A (Max.On) | 111 | 31 | 31/31=100.0% | None required. | AAAA |
| | | 30 | | Spacial/Temporal-4 | AAAB |
| | | 29 | | Spacial/Temporal-2. | ABAB |
| | | 28 | | Spacial/Temporal-4. | BBBA |
| B | 110 | 27 | 27/31= 87.1% | None required. | BBBB |
| | | 26 | | Spacial/Temporal-4. | BBBC |
| | | 25 | | Spacial/Temporal-2. | BCBC |
| | | 24 | | Spacial/Temporal-4. | CCCB |
| C | 101 | 23 | 23/31= 74.2% | None required. | CCCC |
| | | 22 | | Spacial/Temporal-4. | CCCD |
| | | 21 | | Spacial/Temporal-2. | CDCD |

| | | | | | |
|---|---|---|---|---|---|
| | | 20 | | Spacial/Temporal-4. | DDDC |
| D | 100 | 19 | 19/31= 61.3% | None required. | DDDD |
| | | 18 | | Spacial/Temporal-4. | DDDE |
| | | 17 | | Spacial/Temporal-2. | DEDE |
| | | 16 | | Spacial/Temporal-4. | EEED |
| E | 011 | 15 | 15/31= 48.4% | None required. | EEEE |
| | | 14 | | Spacial/Temporal-4. | EEEF |
| | | 13 | | Spacial/Temporal-2. | EFEF |
| | | 12 | | Spacial/Temporal-4. | FFFE |
| F | 010 | 11 | 11/31= 35.5% | None required. | FFFF |
| | | 10 | | Spacial/Temporal-4. | FFFG |
| | | 9 | | Spacial/Temporal-2. | FGFG |
| | | 8.25 | | Spacial/Temporal-4. | FFFH |
| G | 001 | 7 | 7/31= 22.6% | None required. | GGGG |
| | | 6.25 | | Spacial/Temporal-4. | FGGH |
| | | 5.25 | | Spacial/Temporal-4. | GGGH |
| | | 4.5 | | Spacial/Temporal-4. | FGHH |
| | | 3.5 | | Spacial/Temporal-4. | GHGH |
| | | 2.75 | | Spacial/Temporal-4. | HHHF |
| | | 1.75 | | Spacial/Temporal-4. | HHHG |
| H (Off) | 000 | 0 | 0/31= 0.0% | None required. | HHHH |

**Table 3**

In Table No. 3, the pixel sequence codes are given for convenience. While these are shown as being temporal mixing they could also be applied to spatial mixing or a combination of the two. These codes indicate immediately how the adjusted code values, represented by the letters, average numerically over a pixel quad to produce the perceived luminance value.

Again it should be noted that in a preferred embodiment, the digitally accessed luminance levels of the LCD panel have been further adjusted away from those of Table 1 and 2 so as to be even more non-linear. There is a smaller interval between each of the digitally accessed levels A - G and a larger interval between G and H. The panel manufacturer would merely adjust the resistance values in the panel's D-to-A converter so as to achieve the specified luminance levels with the input digital codes. The same rationale applies in that at the low luminance level between G and H, irregularities in the interval will not be significant to a viewer and the uniform and smaller spacing between levels provides more accurate perceived color.

In an application of the Table 3 5-bit per color scheme, it is noted that Figure 2 illustrates new value 10 (FFFG) to the left of the image separation line and value 29 (ABAB) to the right of the image separation line.

A significant benefit of spatial mixing, especially with respect to the example in Figure 3, is that the position of the "G" pixel in the FFFG combination varies from pixel to pixel in subsequent frames. In other words, over subsequent frames in the same quad pixel, its position will change in the quad pixel. Similarly, to the right of the image junction line, the A pixels would alternate between A and B values in subsequent frames so as to achieve both temporal and spatial mixing.

For example, in frame 1 the top line of pixels in the right hand portion of Figure 3 has a code "ABA" whereas in the subsequent frame its code would be "BAB", the third frame, it would be "ABA", the fourth frame "BAB", etc. In this fashion, the spatially mixed luminance over a plurality of pixels is the average of A and B as well as the temporal mix of a single pixel is also going to be A + B over a plurality of frames. The spatial mixing helps to avoid flicker by spreading the luminance variations in a given pixel quad around in a timewise or temporal fashion. Thus, the timewise average for any given pixel will be the same color as the spatial average in one frame for quad pixel.

To achieve 262,144 colors requires a 6-bit per color system (64 x 64 x 64). To realize such a system by utilizing the,temporal approach would require additional interpolation which in turn would require that the temporal mixing process be carried out over perhaps eight frames instead of four frames. If an attempt is made to do this "on the fly", the mixing frequency would be lowered further providing objectionable flicker. If the input frequency is 60 Hz, four frame temporal mixing will provide a display frame rate of 15 Hz (for 5-bit color) which is acceptable given the slight luminance differences among pixels and the minor change in resolution. However, to achieve an additional bit to 6-bit color would require temporal mixing over 8 frames and would cause the display frequency to drop to 7.5 Hz which would make it impossible to avoid objectionable flicker.

**Temporal and Spatial Mixing with Increased Display Frame Rate**

The benefits of obtaining 262,000 colors as opposed to 32,000 (the difference between 6-bit and 5-bit color) merits modest additional cost and/or complexity for quality LCD display driving system.

A preferred embodiment of the present invention provides such a system. It can be seen that digital circuitry can be designed which "frame grabs" video data and allows for independent non-conflicting reading and writing of video data. Particularly useful in the design of such systems are video memory devices which are commonly available and are of the kind that may be independently written into and read from. In these so-called dual port frame memories (such as those available from Toshiba Electronics Inc., Eastern Region, 25 Mall Road, 5th Floor, Burlington, Massachusetts 01803, Part No. TC 524256CMOS Multiport Memory), video can be clocked into one port at a first rate and clocked out of the second port at a second independent rate. With such devices, it is possible to read data at a 60 Hz TV rate into the memory and read it out at any other rate desired with a maximum read out rate determined by "state of the art" limits. The use of such intermediate memory is, in fact, a simple equivalent to that of scan conversion devices which are used to convert European 50 Hz Television to American 60 Hz Television or motion pictures at 48 Hz to 60 Hz TV.

As discussed above, a basic 60 Hz input rate with frame temporal mixing will result in an output at 30 Hz which has no perceptible flicker. 4-frame temporal mixing reduces the output display rate to 15 Hz which becomes marginal and requires attention to the spatial mixing as noted above (to avoid flicker and "lining"). 6-frame or 8-frame mixing would reduce the frequency to 10 Hz or $7\frac{1}{2}$ Hz respectively, where flicker, even with spatial mixing, would become unacceptable.

However, with a dual port frame store memory, video can be read into the memory at 60 Hz but could be read out of the memory at 120 Hz such that 2-frame temporal mixing (4-bit color) would provide a display frame rate of 60 Hz, 4-frame temporal mixing (5-bit color) at a display frame rate of 30 Hz, and 8-frame temporal mixing (6-bit color) at a display frame rate of 15 Hz, no lower than before.

Of course, the luminance levels available at 6 bits per color are possible with a high frame read-out rate and temporal mixing, the ultimate level of color luminance variations is dependent upon the luminance levels which are digitally accessible at each pixel on the display. While the present state of the art TFT/LCD panels are limited to 3-bit per color luminance levels, panel manufacturers have under developement up to 6-bit per color panels that, by itself without any of the above techniques, will provide 262,000 colors. With the above technique, such as 4-frame temporal mixing in combination with spatial mixing, 8-bit per color can be realized allowing 16,777,216 separate colors (256 x 256 x 256). Unfortunately, at present a problem with providing multi-level TFT drive voltages is that such panels have lower yields and consequently significantly higher costs. While higher luminance level resolution is currently being pursued by panel manufacturers, it is not yet known how successful this effort will be. However, even given a 5-bit resolution panel, it can be seen that with the above invention and methods 8-bit color per panel could easily be achieved, i.e. with a frame storage and 8-frame (3-bit) mixing. It can be seen that this results in the desired 16,000,000 color palate and may well be achievable or at lower expense than a 6-bit panel.

## Operation of Preferred Embodiments

### "On the fly" Spatial and/or Temporal Mixing

Figure 4 illustrates one embodiment of the present invention in which temporal and spatial mixing techniques are utilized to process color analog video to provide 5-bit (32,768) color.

Figure 4 illustrates a typical spatial and/or temporal mixing apparatus in which analog color video and horizontal and vertical sync signals are supplied to a 6-bit A/D converter 20. A phase locked VCO 22 provides a pixel clock output to the Horizontal and vertical sync generator 28 (for generation of the pixel clock ÷ 2 and pixel clock ÷ 4 signals supplied to the look-up table 24 and the display 26. Of course, if 5-bit color is all that is required, then a 5-bit A-to-D converter could be used. The level of digitally accessed variations sensed by the A-to-D converter is the maximum level which can be applied to the display with the above discussed spatial and/or temporal mixing.

Figure 4 has been illustrated with respect to the processing of a single color and for typical three-color display outputs, additional A-to-D converters and lookup tables for the other two colors would be necessary, although the horizontal and vertical sync generator supply the same horizontal and vertical sync signals to the respective lookup tables. Also, it should be appreciated that, if for some reason digital color video is supplied, the A/D converters would be unnecessary.

In the Figure 4 embodiment, 6-bit digital data (red) is supplied to lookup table 24 which provides the appropriate 3-bit output compatible with LCD display 26. Video sync information is supplied to a horizontal and vertical sync generator 28 which is, in this embodiment, primarily a sync signal divider which provides vertical sync divided by 4, vertical sync divided by 2, horizontal sync divided by 4, horizontal sync divided by 2, pixel clock divided by 4 and pixel clock divided by 2 outputs to lookup table 24. It also provides horizontal sync and vertical sync information to the LCD display which may be the same as the horizontal and vertical sync information supplied to the system at the video sync input.

The operation of Figure 4 for spatial mixing only is as follows. Since we are only discussing spatial mixing, and not temporal mixing, the frame rate of display 26 is identical to the frame rate of the input color video. We will assume that, as each luminance level 6-bit word is applied to lookup table 24 from the A-to-D converter, the lookup table will provide a 3-bit word to the display 26. However, because we are spatially mixing two pixels in the display to provide the color of a single pixel input, some color fidelity could be lost and, in fact, on a 4-bit color system, pixel pairs on the display are provided with different 3-bit words so as to provide an average color luminance level output which is indicative of the color input word supplied to lookup table 24.

In a preferred embodiment, 5-bit or 6-bit data is supplied to the lookup table and the lookup table provides 3-bit word outputs for each of four pixels in the quad pixel arrangement shown in Figures 2 and 3. It is noted that in the 2-pixel spatial mixing embodiment, the lookup table must hold the input pixel for the time required to read out data to the 2-pixel pair on the display and as a consequence will have to skip every other input pixel (or alternatively, adopt a new pixel color luminance level) if the display is to operate in real time. This could result in a minor reduction in display color fidelity at the edge of one color because 50% of the data supplied to the lookup table 24 is lost (because the lookup table has to energize two pixels whose luminance level can then be spatially mixed to provide the single desired display luminance level). To keep track of the data for every other pixel that is to be discarded, the vert. and hor. sync divided by 2 as well as pixel clock divided by 2 signals are needed.

With the quad pixel arrangement shown in Figures 2 and 3, the single input is utilized to characterize the color and then, as long as the input color doesn't change, it accesses the four adjacent pixels in the appropriate mixture so as to display the perceived 5-bit color. Each pixel based upon one input to the lookup table, each of the four related pixels in the display is provided a separate and independent 3-bit word indicating its required luminance level. While the 3-bit words provide only digitally accessed luminance levels 0 through 7, (for a total of eight) the sum or average of the four luminance levels supplied to the quad pixel provides an effective 5-bit per color resolution, i.e. 32,768 separate colors. While in the 5-bit spatial mixing mode, even though some color fidelity at a color junction line could be lost, as long as the panel resolution is sufficiently accurate, image quality will suffer very little. The vert. and hor. sync divided by 4 and the pixel clock divided by 4 are needed to keep track of the 3 pixel luminance information which is lost.

Figure 4 is also useable for temporal mixing and operates precisely in the manner of the spatial mixing embodiment discussed above with some minor re-programming of lookup table 24. Assume that analog color is supplied at 60 Hz and assume for the purpose of discussion that the "complete" display frame rate operates at 30 Hz. The horizontal and vertical sync supplied to the display will be one half that of the horizontal and vertical sync supplied at the video sync input. The vert. sync ÷ 2 and the hor. sync ÷ 2 inputs to the lookup table "tell" the lookup table whether the first frame data is to be accessed or whether the second frame data is to be accessed. It will be recalled that temporal mixing, the same pixel is accessed in a subsequent frame, but with a different 3-bit luminance level code such that the average between the two successive frames is the desired 4-bit color.

The vert. sync ÷ 2 signal applied to the lookup table effectively switches the lookup table between first and second color sequences to provide a "complete" perceived color frame. The 6-bit input signal from the A-to-D converter in the first frame looks up one 3-bit color output and outputs that color code to the display and the next frame the 6-bit word to the same pixel looks up a different 3-bit color code depending upon the color being selected. For example, assume that the required color requires that a pixel toggle between "A" and "B" color. The one pixel, when accessed in frame 1, the lookup table will provide the 3-bit code for an "A" luminance level and the second time the lookup table is accessed the vertical sync divided by two input will have changed such that when the same color input is supplied to the lookup table, it will provide the "B" color output.

In the same fashion, 5-bit color can be read into lookup table 24 and the temporal mixing can be accomplished over four frames by utilizing the vertical sync ÷ 4 signal to indicate to the lookup table which frame is to be accessed for it's 3-bit word to be readout. This is done to provide the total of four consecutive frame words which are temporally mixed to provide the desired 5-bit color output from the display 26.

It can be seen that where only two frames are used to average color, the input data frequency of 60 Hz is reduced to an output display frequency of 30 Hz in order to permit sufficient time for each pixel to be accessed twice during a "complete" display frame. A "complete" display frame is one which includes all frames necessary to display the temporal mixed data. Therefore, the horizontal and vertical sync will remain synchronized with the input horizontal and vertical sync but the output display 26 will have a "complete" frame only after two frames of color video N has been displayed, i.e. the effective display rate will be 30 Hz. If four frames are utilized (5-bit per color), the effective display frame rate for "complete" frames will 15 Hz.

In a preferred embodiment of Figure 4, of course, the lookup table 24 uses both temporal and spatial modulation to provide exceptionally uniform 5-bit color with flicker which is imperceptible to a human observer. The 4-frame temporal mixing is combined with a form of quad pixel spatial modulation which improves color uniformity but does not provide additional bits of color luminance level resolution (so as to not reduce pixel resolution of the output display). To utilize this combination of temporal and spatial mixing, the programming of lookup table 24 is accomplished as follows.

For 2-frame temporal mixing, if a given input to the lookup table from the A-to-D converter requires the average of codes "A" and "B" for the first pixel in the first frame, display 26 will be provided with the 3-bit code for "A". However, for the adjacent pixel, assuming that the input color word has not changed, lookup table 24 will provide a 3-bit word "B" to the second pixel of display 26. The third pixel of the first frame will be provided with the 3-bit word "A" from lookup table 24 and so on until a portion of the resultant image is reached in which a change in color occurs. The above continues until a complete frame of the input color video has been read out of the lookup table and thus displayed on display 26.

The second frame of the input then begins with the lookup table sensing that the second frame is beginning by virtue of the vertical sync ÷ 2 signal changing from high to low or low to high depending upon the circuitry chosen. As long as the input color 2 from the A-to-D converter 20 has not changed, lookup table 24 will supply a 3-bit word with luminance "B" for pixel 1, luminance level "A" for pixel 2, luminance level "B" for pixel 3 and so forth until the color changes or until the entire display has been energized at the new levels.

While display 26 in the "on the fly" embodiment provides an output display which is synchronized with the input color video, the frame is only "complete" when two successive frames are displayed, each with the slightly different luminance levels at the pixels of interest so that the average luminance level which is perceived by a viewer is the average in pixels 1, 2 and 3 at least as discussed above, A+B÷2 or the average of luminance levels A and B.

The same average effect could be achieved by energizing pixels 1 through 3 at level "A" in frame 1 and level "B" in frame 2, this could lead to flicker perception and/or the perception of lines in the display, especially at lower "complete" frame rates. Therefore, the spatial modulation helps insure a dispersion of one digitally accessed luminance level in another digitally accessed luminance level so as to guard against both flicker and "lining."

Although the above has been discussed with respect to a 2-frame embodiment which would display "complete" frames at 30 Hz, the same is true of a 4-frame embodiment except that for each pixel, lookup table 24 would have four separate frames of data where each frame is addressed depending upon the vertical sync ÷ 4 and vertical sync ÷ 2 signals (00 would be frame 1, 01 would be frame 2, 10 would be frame 3 and 11 would be frame 4). The lookup table for a given color input would provide four successive frame outputs to an individual pixel on display 26 so that the perceived color luminance would be a mixture of the four successive frames.

Obviously, under this system, a "complete" frame rate would be 15 Hz, given a 60 Hz color video input.

## Spatial and Temporal Mixing with Enhanced Display Rate

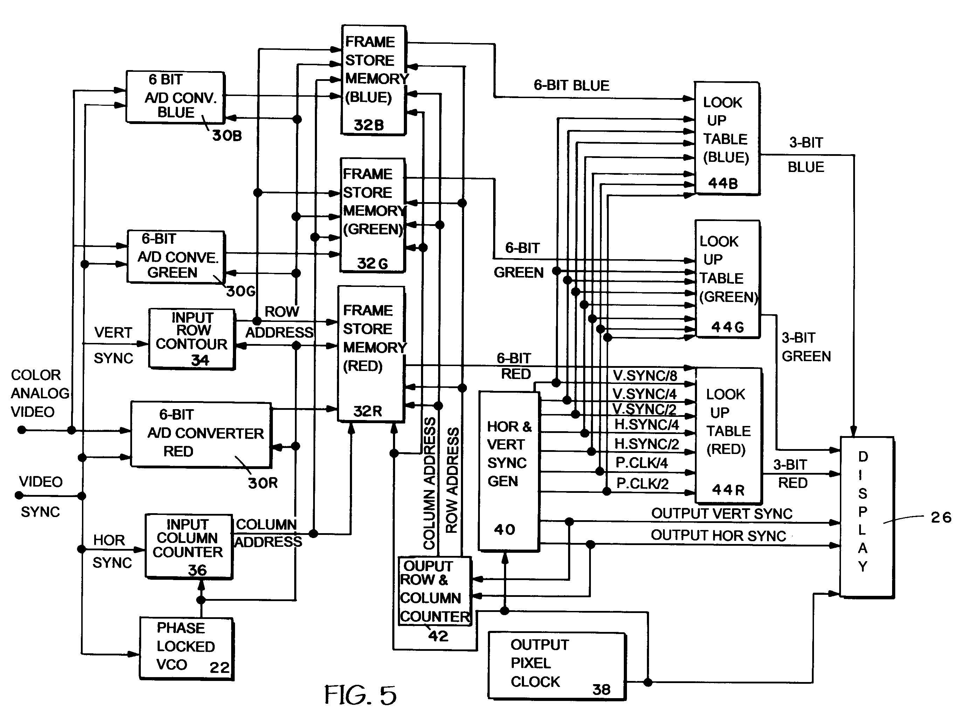

Figure 5 illustrates a full three-color embodiment for displaying color video whereas previously discussed, the dual port memories are used which can be fed at the standard 60 Hz rate but readout at a significantly higher rate, perhaps as much as 120 Hz so as to permit 6-bit temporal mixing with "complete" displays being readout at 15 Hz. Spatial mixing is utilized as previously discussed, so as to minimize any possibility of flickering or "lining" in the embodiment.

A-to-D converters 30R, 30G and 30B convert each of the analog color inputs and supply the digital code to dual port frame store memories 32R, 32G and 32B also for red, green and blue channels respectively. Because data is stored at specific rows and columns, an input row counter 34 and input column counter 36, driven by the video sync signals supply row and column address information to the frame store memories so that the 6-bit digital codes, supplied to the memories from the A-to-D converters, are stored at their appropriate row and column addresses.

A phase locked voltage controlled oscillator VCO 22 driven by the video sync signals supplies clock inputs to the input row and column counters 34 and 36, respectively, as well as the A-to-D converters and the frame store memories. Thus, it can be seen that information is clocked into the 3 frame store memories independent of any output reading of such memories.

An output pixel clock 38 supplies a clock signal to the readout portion of each frame store memory, to a horizontal and vertical sync generator 40, and to display 26. The horizontal and vertical sync generator provides output vertical and horizontal sync signals to display 26 and to output row and column counter 42 which provides row and column addresses to the frame store memories for the reading of data out said memories. As each of the frame store memories row and column address is clocked, the 6-bit data code, for each respective color, is applied to respective look-up tables 44R, 44G and 44B for red, blue and green, respectively.

Therefore, just as with the Figure 4 embodiment the digital data is applied to a look-up table which supplies spacial mixing and temporal mixing as it would normally be programmed. The vertical sync divided by eight, four, and two, the horizontal sink divided by four and two and pixel clock divided by four and two are all supplied from the horizontal and vertical sync generator 40 to each of the look-up tables.

It is noted that while in Figure 4 the vertical sync ÷ 4 was the longest duration digital signal applied to the look-up table 24, in the Figure 5 embodiment vertical sync ÷ 8 is supplied to each of the tables. This, in combination with the vertical sync ÷ 4 and ÷ 2, permits the look-up table to choose among eight different frames, a 3-bit data code which is read out when a single pixel is accessed by a 6-bit data input. Thus, each pixel of the display is addressed eight times for a "complete" display to be presented.

Therefore, the display frequency is going to be one-eighth the read out frequency from the frame store memories (since it will take eight frames to generate a "complete" frame) with 6-bit color information being displayed. If the frame stores are clocked at 120 Hz by the output pixel clock, the display rate would be 15 Hz. As previously discussed with respect to dual port frame store memories, data can easily be read in at 60 Hz and can be read out at 120 Hz although 120 Hz may be approaching the limit of currently available LCD panel's ability to receive data. As can be seen, the full color embodiment also uses not only 3-bits of temporal mixing to achieve 6-bit display color, the look-up tables would also be programmed to use spacial mixing to avoid flickering and lining even in the perceived image "flickering" and "lining" in the perceived image in the fashion of Figure 3. As a consequence, the driving of the output display at 15 Hz will provide 6-bit color, i.e., 262,144 individual colors with little or no perceptible discrepancies.

Although not presently available, should 4, 5, or 6-bit digitally accessible LCD color displays become available then the use of the Figure 5 embodiment and the above-discussed techniques can provide 7, 8, and 9-bit color from such a display rendering such displays visually identical to conventional CRT displays driven by analog signals.

Both the Figures 4 and 5 embodiments illustrate color video being supplied in analog form. Of course, if the video is supplied in digital form, this could be applied directly to the look-up table in the Figure 4 embodiment and directly to the frame store memories in the Figure 5 embodiment as long as row and column addresses can be derived from the horizontal and vertical sync signals.

It is noted that the look-up tables must keep track of the odd and even numbered columns and rows so as to ensure the spacial mixing as discussed with respect to Figure 3. The look-up tables also require the vertical sync divided by two, four and/or eight signals to keep track of frame numbers so as to access the appropriate 3-bit luminance level data for a given pixel depending upon whether it is the first, second, third or fourth frame being accessed. The look-up table using the digital input word and the vertical and horizontal sync information can, on a pixel-by-pixel basis, translate the 6-bit input data word to 3-bit output data words appropriate to the color being generated and supply this color to the display panel 26 in appropriate sequence so that with temporal mixing, the "complete" frame being displayed is an accurate representation of the 6-bit color. It is clear that with respect to Figures 4 and 5, if only 4 or 5-bit color is to be generated, the A-to-D converters can be 4 or 5-bit A-to-D converters as well.

It is noted that the preferred embodiment of the above invention places a requirement upon the LCD panel manufacturer to be able to adjust the voltage values accessed by each 3-bit code word applied to the liquid crystal display panel. Without being able to adjust these values so as to obtain the before-discussed desired sequences, a less satisfying, trial and error method of programming the look-up tables would be necessary.

Therefore, while the present specification is by way of example only and describes preferred embodiments of the present invention, the invention is not so limited and is only limited by the claims appended hereto.

## Claims

**1** A method of driving a thin film transistor liquid crystal display device with an analog colour video input to provide a perceived colour output as viewed by a human observer, said perceived colour output is the combination of three separate perceived colour luminance levels, said liquid crystal display device having a plurality of pixels, each pixel including three transistors, each transistor associated with one of red, green and blue colours and controlling the luminance of a respective associated colour, said liquid crystal device providing only limited digitally accessed colour luminance levels for said transistors of each colour thereby permitting only a limited number of digitally accessed colour luminance levels of each colour to be displayed by said display panel, thereby limiting the perceived colour output of said panel during a colour "complete" output frame duration, said perceived colour luminance level for each colour is not one of said limited number of digitally accessed colour luminance levels, said method comprising the step of:

energising said pixels within a colour "complete" output frame duration at said digitally accessed colour luminance levels differentially in space and/or time to produce spatially and/or temporally averaged perceived colours which do not correspond with one of said limited number of digitally accessed luminance levels.

**2** A method of driving a thin film transistor liquid crystal display device with an analog colour video input to provide a perceived colour output as viewed by a human observer, said perceived colour output is the combination of three separate perceived colour luminance levels, said input including horizontal and vertical sync signals at an input frame rate of display having a frame duration, said liquid crystal display device having a plurality of pixels, each pixel including three transistors, each transistor associated with one of red, green and blue colours and controlling the luminance of a respective associated colour, said liquid crystal device providing only limited digitally accessed colour luminance levels for said transistors of each colour thereby permitting only a limited number of digitally accessed colour luminance levels of each colour to be displayed by said display panel, thereby limiting the perceived colour output of said panel during a colour "complete" output frame duration, said perceived colour luminance level for each colour is not one of said limited number of digitally accessed colour luminance levels, said method comprising the steps of:

energising a first portion of said plurality of pixels to provide a separate digitally accessed colour luminance level for each of said transistors on said first portion of said plurality of pixels for at least a first portion of said colour "complete" output frame duration for each colour; and

energising a second portion of said plurality of pixels to provide a second and separate digitally accessed colour luminance levels for each of said transistors on said second portion of said plurality of pixels during said at least first portion of said colour "complete" output frame duration, where said first portion of pixels is dispersed within said second portion of pixels, and said first and second portions of pixels, viewed as a whole, provides a perceived colour luminance level for each colour during at least a portion of said colour "complete" output frame duration, which perceived colour is not one of said limited number of digitally accessed luminance levels.

**3** A method of driving a thin film transistor liquid crystal display device with an analog colour video input to provide a perceived colour output as viewed by a human observer, said perceived colour output is the combination of three separate perceived colour luminance levels, said liquid crystal display device having a plurality of pixels, each pixel including three transistors, each transistor associated with one of red, green and blue colours and controlling the luminance of a respective associated colour, said liquid crystal device providing only limited digitally accessed colour luminance levels for said transistors of each colour thereby permitting only a limited number of digitally accessed colour luminance levels of each colour to be displayed by said display panel, thereby limiting the perceived colour output of said panel during a colour "complete" output frame duration, said perceived colour luminance level for each colour is not one of said limited digitally accessed colour luminance levels, said method comprising the steps of:

energising at least one pixel to provide a first digitally accessed colour luminance level for each of said colours for a first portion of said colour "complete" output frame duration; and

energising said at least one pixel to provide a second digitally accessed colour luminance level for each of said colours for a second portion of said colour "complete" output frame duration, where a perceived colour luminance level for each colour is an average colour luminance level which is not one of said digitally accessed colour luminance levels, and said perceived colour output is the average of the perceived colour luminance levels for all three colours over the colour "complete" output frame duration.

4 A method of driving a thin film transistor liquid crystal display device with an analog colour video input to provide a perceived colour output as viewed by a human observer, said perceived colour output is the combination of three separate perceived colour luminance levels, said liquid crystal display device having a plurality of pixels, each pixel including three transistors, each transistor associated with one of red, green and blue colours and controlling the luminance of a respective associated colour, said liquid crystal device providing only limited digitally accessed colour luminance levels for said transistors of each colour thereby permitting only a limited number of digitally accessed colour luminance levels of each colour to be displayed by said display panel, thereby limiting the perceived colour output of said panel during an colour "complete" output frame duration, said perceived colour luminance level for each colour is not one of said limited digitally accessed colour luminance levels, said method comprising the steps of:

energising a first portion of said plurality of pixels to provide a first digitally accessed colour luminance level for each of said transistors for a first portion of said colour "complete" output frame duration;

energising said first portion of said plurality of pixels to provide a second digitally accessed colour luminance level for each of said transistors for a second portion of said colour "complete" output frame duration, where a perceived colour luminance level for each of said colours during said first and second portions of said colour "complete" output frame duration is an average of digitally accessed colour luminance levels for each colour over said first and second output frame portions and is not a digitally accessed colour luminance level;

energising a second portion of said plurality of pixels to provide a third digitally accessed colour luminance level for each of said transistors for a third portion of said colour "complete" output frame duration; and

energising said second portion of said plurality of pixels, to provide a fourth digitally accessed colour luminance level for each of said transistors for a fourth portion of said colour "complete" output frame duration, where a perceived colour luminance level for each of said colours during said third and fourth portions of said colour "complete" output frame duration is an average of digitally accessed colour luminance levels for each colour over said third and fourth portions and is not a digitally accessed colour luminance level, and said perceived colour output is the combination of perceived colour luminance levels for all colours over said colour "complete" output frame duration.

5 A method of driving a thin film transistor liquid crystal display device with an analog colour video input to provide a perceived colour output as viewed by a human observer, said perceived colour output is the combination of three separate perceived colour luminance levels, said liquid crystal display device having a plurality of pixels, each pixel including three transistors, each transistor associated with one of red, green and blue colours and controlling the luminance of a respective associated colour, said liquid crystal device providing only limited digitally accessed colour luminance levels for said transistors of each colour thereby permitting only a limited number of digitally accessed colour luminance levels of each colour to be displayed by said display panel, thereby limiting the perceived colour output of said panel during an colour "complete" output frame duration, said perceived colour luminance level for each colour is not one of said limited digitally accessed colour luminance levels, said method comprising the steps of:

converting said analog colour video input into digital codes indicative of colour luminance levels for each of said colours;

storing said digital codes in a dual port memory at row and address locations at an input frame rate;

reading said digital codes out of said storage means row and address locations at a readout rate at least twice said output frame rate, said output frame rate equal to the inverse of said colour "complete" output frame duration;

converting said digital codes read out of said storage means, by means of a look up table, into said digitally accessed colour luminance level codes;

applying said digitally accessed colour luminance level codes to said display panel at said readout rate thereby:

energising a first portion of said plurality of pixels to provide a first digitally accessed colour luminance level for each of said transistors for a first portion of said colour "complete" output frame duration;

energising said first portion of said plurality of pixels to provide a second digitally accessed colour luminance level for each of said transistors for a second portion of said colour "complete" output frame duration, where a perceived colour luminance level for each of said colours during said first and second portions of said colour "complete" output frame duration is an average of digitally accessed colour luminance levels for each colour over said first and second output frame portions and is not a digitally accessed colour luminance level;

energising a second portion of said plurality of pixels to provide a third digitally accessed colour luminance level for each of said transistors for a third portion of said colour "complete" output frame duration; and

energising said second portion of said plurality of pixels, to provide a fourth digitally accessed colour luminance level for each of said transistors for a fourth portion of said colour "complete" output frame duration, where a perceived colour luminance level for each of said colours during said third and fourth portions of said colour "complete" output frame duration is an average of digitally accessed colour luminance levels for each colour over said third and fourth portions and is not a digitally accessed colour luminance level, and said perceived colour output is the combination of perceived colour luminance levels for all colours over said colour "complete" output frame duration, where said output frame rate is not equal to said input frame rate.

6 An apparatus for driving a thin film transistor liquid crystal display device with an analog colour video input to provide a perceived colour output as viewed by a human observer, said liquid crystal display device having a plurality of pixels, each pixel including three transistors, each transistor associated with one of red, green and blue colours and controlling the luminance of a respective associated colour, said liquid crystal device providing only limited digitally accessed discrete colour luminance levels for said transistors thereby permitting only a limited number of digitally accessed colour luminance levels to be read into said display panel, thereby limiting the perceived colour output of said panel, said perceived colour luminance level is not one of said limited number of digitally accessed colour luminance levels, said apparatus comprising:

analog to digital converter means, responsive to said analog colour video input, for providing a digital output indicative of the luminance level of at least one colour of said analog colour video input;

look-up table means, responsive to said digital output means and connected to said display device, for energising pixels at said digitally accessed luminance levels differentially in space and/or time to produce spatially and/or temporally averaged perceived colours which do not correspond to any single digitally accessed luminance level.

7 An apparatus for driving a thin film transistor liquid crystal display device with an analog colour video input to provide a perceived colour output as viewed by a human observer, said input including horizontal and vertical sync signals at a frame rate of display having a frame duration, said liquid crystal display device having a plurality of pixels, each pixel including three transistors, each transistor associated with one of red, green and blue colours and controlling the luminance of a respective associated colour, said liquid crystal device providing only limited digitally accessed discrete colour luminance levels for said transistors thereby permitting only a limited number of digitally accessed colour luminance levels to be read into said display panel, thereby limiting the perceived colour output of said panel, said perceived colour luminance level is not one of said limited number of digitally accessed colour luminance levels, said apparatus comprising:

analog to digital converter means, responsive to said analog colour video input, for providing a digital output indicative of the luminance level of at least one colour of said analog colour video input;

look-up table means, responsive to said digital output means and connected to said display device, for energising at least two pixels at different digitally accessed luminance levels such that perceived luminance of said pixel pair is a level not equal to any single digitally accessed luminance level.

8 An apparatus for driving a thin film transistor liquid crystal display device with an analog colour video input to provide a perceived colour output as viewed by a human observer, said perceived colour output is the combination of three separate perceived colour luminance levels, said liquid crystal display device having a plurality of pixels, each pixel including three transistors, each transistor associated with one of red, green and blue colours and controlling the luminance of a respective associated colour, said liquid crystal device providing only limited digitally accessed colour luminance levels for said transistors thereby permitting only a limited number of digitally accessed colour luminance levels to be read into said display panel thereby limiting the perceived colour output during an colour "complete" output frame duration, said perceived colour luminance level is not one of said limited number of digitally accessed colour luminance levels, said apparatus comprising:

analog to digital converter means, responsive to said analog colour video input, for providing a digital output indicative of the colour luminance level for each of said colours of said analog colour video input, for each display pixel;

look-up table means, responsive to said digital output means, said colour "complete" output frame duration and connected to said display device, for energising at least one pixel to provide a first digitally accessed colour luminance level for each of said colours for a first portion of said colour "complete" output frame duration and for energising said at least one pixel to provide a second digitally accessed colour luminance level for each of said colours for a second portion of said colour "complete" output frame duration, such that perceived colour luminance of said pixel during said colour "complete" output frame duration is a level not equal to any single digitally accessed colour luminance level.

**9** An apparatus for driving a thin film transistor liquid crystal display device with an analog colour video input to provide a perceived colour output as viewed by a human observer, said perceived colour output is the combination of three separate perceived colour luminance levels, said liquid crystal display device having a plurality of pixels, each pixel including three transistors, each transistor associated with one of red, green and blue colours and controlling the luminance of a respective associated colour, said liquid crystal device providing only limited digitally accessed colour luminance levels for said transistors thereby permitting only a limited number of digitally accessed colour luminance levels to be read into said display panel thereby limiting the perceived colour output during an colour "complete" output frame duration, said perceived colour luminance level is not one of said limited number of digitally accessed colour luminance levels, said plurality of pixels including first and second portions, said apparatus comprising:

analog to digital converter means, responsive to said analog colour video input, for providing a digital output indicative of the luminance level of at least one colour of said analog colour video input;

look-up table means, responsive to said digital output means, said colour "complete" output frame duration and connected to said display device, for energising at least said first and second portions of pixels at different digitally accessed luminance levels for each of said colours, said at least first portion of pixels energised to provide a first digitally accessed colour luminance level for a first portion of said colour "complete" output frame duration and to provide a second digitally accessed colour luminance level for a second portion of said colour "complete" output frame duration, said second portion of pixels energised to provide a third digitally accessed colour luminance level during said first portion of said colour "complete" output frame duration and to provide a fourth digitally accessed colour luminance level during said second portion of said colour "complete" output frame duration, such that perceived colour luminance of each of said pixel portions is a level not equal to any single digitally accessed colour luminance level, and perceived colour output of said first and second portions of pixels is also a level not equal to any single digitally accessed colour luminance level.

**10** An apparatus for driving a thin film transistor liquid crystal display device with an analog colour video input to provide a perceived colour output as viewed by a human observer, said perceived colour output is the combination of three separate perceived colour luminance levels, said liquid crystal display device having a plurality of pixels, each pixel including three transistors, each transistor associated with one of red, green and blue colours and controlling the luminance of a respective associated colour, said liquid crystal device providing only limited digitally accessed colour luminance levels for said transistors of each colour thereby permitting only a limited number of digitally accessed colour luminance levels of each colour to be displayed by said display panel, thereby limiting the perceived colour output of said panel during an colour "complete" output frame duration, said perceived colour luminance level for each colour is not one of said limited digitally accessed colour luminance levels, said apparatus comprising:

A-to-D converter means for converting said analog colour video input into digital codes indicative of colour luminance levels for each of said colours;

frame store memory means for storing said digital codes at row and address locations at an input frame rate;

means for reading said digital codes out of said storage means row and address locations at a readout rate at least twice said output frame rate, said output frame rate equal to the inverse of said colour "complete" output frame duration;

look up table means for converting said digital codes read out of said storage means into said digitally accessed colour luminance level codes;

means for applying said digitally accessed colour luminance level codes to said display panel at said readout rate thereby:

energising a first portion of said plurality of pixels to provide a first digitally accessed colour luminance level for each of said transistors for a first portion of said colour "complete" output frame duration;

energising said first portion of said plurality of pixels to provide a second digitally accessed colour luminance level for each of said transistors for a second portion of said colour "complete" output frame duration, where a perceived colour luminance level for each of said colours during said first and second portions of said colour "complete" output frame duration is an average of digitally accessed colour luminance levels for each colour over said first and second output frame portions and is not a digitally accessed colour luminance level;

energising a second portion of said plurality of pixels to provide a third digitally accessed colour luminance level for each of said transistors for a third portion of said colour "complete" output frame duration; and

energising said second portion of said plurality of pixels to provide a fourth digitally accessed colour luminance level for each of said transistors for a fourth portion of said colour "complete" output frame duration, where a perceived colour luminance level for each of said colours during said third and fourth portions of said colour "complete" output frame duration is an average of digitally accessed colour luminance levels for each colour over said third and fourth portions and is not a digitally accessed colour luminance level, and said perceived colour output is the combination of perceived colour luminance levels for all colours over said colour "complete" output frame duration, where said output frame rate is not equal to said input frame rate.

11 A method of providing simulated analog colour by driving a thin film transistor liquid crystal display device with an analog colour video input to provide a perceived colour output as viewed by a human observer, said perceived colour output is the combination of three separate perceived colour luminance levels, said liquid crystal display device having a plurality of pixels, each pixel including three transistors, each transistor associated with one of red, green and blue colours and controlling the luminance of a respective associated colour, said liquid crystal device providing only limited digitally accessed colour luminance levels for said transistors of each colour thereby permitting only a limited number of digitally accessed colour luminance levels of each colour to be displayed by said display panel, thereby limiting the perceived colour output of said panel during an colour "complete" output frame duration, said perceived colour luminance level for each colour is not one of said limited digitally accessed colour luminance levels, said method comprising the steps of:

providing a thin film transistor liquid crystal device having 0 to 7 digitally addressable colour luminance levels, said device including D-to-A converter means for converting each 3-bit digital code, input to said panel, to a drive voltage for a respective colour transistor, wherein said transistor drive voltages for said digitally addressable colour is such that spacing between a perceived luminance level of at least two adjacent digitally accessed colour luminance levels and an adjacent digitally accessed colour luminance are uniform gradations of colour luminance level for at least higher luminance levels;

energising a first portion of said plurality of pixels to provide a first digitally accessed colour luminance level for each of said transistors for a first portion of said colour "complete" output frame duration;

energising said first portion of said plurality of pixels to provide a second digitally accessed colour luminance level for each of said transistors for a second portion of said colour "complete" output frame duration, where a perceived colour luminance level for each of said colours during said first and second portions of said colour "complete" output frame duration is an average of digitally accessed colour luminance levels for each colour over said first and second output frame portions and is not a digitally accessed colour luminance level;

energising a second portion of said plurality of pixels to provide a third digitally accessed colour luminance level for each of said transistors for a third portion of said colour "complete" output frame duration; and

energising said second portion of said plurality of pixels, to provide a fourth digitally accessed colour luminance level for each of said transistors for a fourth portion of said colour "complete" output frame duration, where a perceived colour luminance level for each of said colours during said third and fourth portions of said colour "complete" output frame duration is an average of digitally accessed colour luminance levels for each colour over said third and fourth portions and is not a digitally accessed colour luminance level, and said perceived colour output is the combination of perceived colour luminance levels for all colours over said colour "complete" output frame duration.

12 An apparatus for providing simulated analog colour by driving a thin film transistor liquid crystal display device with an analog colour video input to provide a perceived colour output as viewed by a human observer, said perceived colour output is the combination of three separate perceived colour luminance levels, said liquid crystal display device having a plurality of pixels, each pixel including three transistors, each transistor associated with one of red, green and blue colours and controlling the luminance of a respective associated colour, said liquid crystal device providing only limited digitally accessed colour luminance levels for said transistors thereby permitting only a limited number of digitally accessed colour luminance levels to be read into said display panel thereby limiting the perceived colour output during an colour "complete" output frame duration, said perceived colour luminance level is not one of said limited number of digitally accessed colour luminance levels, said plurality of pixels including first and second portions, said apparatus comprising;

a thin film transistor liquid crystal device having 0 to 7 digitally addressable colour luminance levels, said device including D-to-A converter means for converting each 3-bit digital code input to said panel to a drive voltage for a respective colour transistor, wherein said transistor drive voltages for said digitally addressable colour is such that spacing between a perceived luminance level of at least two adjacent digitally accessed colour luminance levels and an adjacent digitally accessed colour luminance are uniform gradations of colour luminance level for at least higher luminance levels;

analog to digital converter means, responsive to said analog colour video input, for providing a digital output indicative of the luminance level of at least one colour of said analog colour video input;

look-up table means, responsive to said digital output means, said colour "complete" output frame duration and connected to said display device, for energising at least said first and second portions of pixels at different digitally accessed luminance levels for each of said colours, said at least first portion of pixels energised to provide a first digitally accessed colour luminance level for a first portion of said colour "complete" output frame duration and to provide a second digitally accessed colour luminance level for a second portion of said colour "complete" output frame duration, said second portion of pixels energised to provide a third digitally accessed colour luminance level during said first portion of said colour "complete" output frame duration and to provide a fourth digitally accessed colour luminance level during said second portion of said colour "complete" output frame duration, such that perceived colour luminance of each of said pixel portions is a level not equal to any single digitally accessed colour luminance level, and perceived colour output of said first and second portions of pixels is also a level not equal to any single digitally accessed colour luminance level.

FIG. 4

FIG. 2

FIG. 3

FIG. 1
(PRIOR ART)

FIG. 5

EP 0 526 045 A2